# EUROPEAN PATENT APPLICATION

(11) **EP 1 641 298 A1**
(43) Date of publication of application: **29.03.2006**
(21) Application number: 03736303.3
(22) Date of filing: 27.06.2003
(51) Int. Cl.: H04Q 7/38

(54) **COMMUNICATION SYSTEM, TRANSMISSION STATION, AND RECEPTION STATION**

(71) Applicant: MITSUBISHI DENKI KABUSHIKI KAISHA, Tokyo 100-8310 (JP)
(72) Inventor: NIWANO, Kazuhito c/o Mitsubishi Denki K. K., Tokyo 100-8310 (JP)
(74) Representative: Popp, Eugen
(86) International application number: PCT/JP2003/008247
(87) International publication number: WO 2005/002269

(57) **Abstract**

The present invention relates to a mobile wireless communication system including a base station and a mobile station, and has an object to obtain a communication system capable of reducing power consumption at the mobile station without increases in processing delay and complexity of the device.

To attain the above object, a base station (1) transmits control information on the number of to-be-received HS-SCCHs to a mobile station (2) through an HS-PDSCH without making the control information go through a process by an RRC layer process block (901). The mobile station (2) changes settings on the number of to-be-received HS-SCCHs based on the control information on the number of to-be-received HS-SCCHs received from the base station (1) without making the control information go through a process by an RRC layer process block (101).

## Description

### Technical Field

The present invention relates to a transmitting station (base station), a receiving station (mobile station), and a communication system (particularly a mobile wireless communication system) including the base station and the mobile station.

### Background Art

As a mobile wireless communication scheme, typified by a mobile phone, communication standards called the Third Generation have been adopted as IMT-2000 by the ITU (International Telecommunication Union). In Japan, commercial service of a W-CDMA (FDD) (Wideband-Code Division Multiple Access: Frequency Division Duplex) scheme has been offered since 2001. The W-CDMA (FDD) scheme aims to obtain a communication speed of approximately 2 Mbps (Mega bit per second) at each mobile station, the first specifications of which were determined as Release 1999 (or version 3.x.x) that is a standard version finalized by the standardization organization 3GPP (3^{rd} Generation Partnership Project) in 1999.

Meanwhile, due to the proliferation of the Internet in recent years and so on, there has been demand for further enhancement of packet data transmission speed in downlink from a base station to a mobile station. To that end, consideration has been given to the addition of new HSDPA (High Speed Downlink Packet Access)-compatible downward channels in addition to Release 1999-compatible downward channels, which have been additionally defined as Release 5 (or version 5.x.x) that is a new version of the 3GPP standards, while maintaining backward compatibility with Release 1999.

The formats and transmission-reception timings of all kinds of channels of physical layers in Release 5 are discussed in a technical specification TS 25.211 (the following non-patent document 1), Chapter 5.2 (Uplink physical channels), Chapter 5.3 (Downlink physical channels), Chapter 6.2 (Association of physical channels and physical signals), and Chapter 7 (Timing relationship between physical channels).
Non-Patent Document 1
3^{rd} Generation Partnership Project,
"3GPP TS 25.211 V5.3.0 (2002-12)
Technical Specification
3^{rd} Generation Partnership Project;
Technical Specification Group Radio Access Network;
Physical channels and mapping of transport channels
onto physical channels (FDD)
(Release 5)",
Chapter 5.2, Chapter 5.3, Chapter 6.2, and Chapter 7,
[online],
January 7, 2003,
[search on January 15, 2003],
Internet
<URL: http://www.3gpp.org/ftp/Specs/archive/25 series/25.211/>

The flow of processing (coding, multiplexing, and the like) data from a transport layer in the physical layer in Release 5 is discussed in a technical specification TS 25.212 (the following non-patent document 2), Chapter 4.5 (Coding for HS-DSCH), and Chapter 4.6 (Coding for HS-SCCH).
Non-Patent Document 2
3^{rd} Generation Partnership Project,
"3GPP TS 25.212 V5.3.0 (2002-12)
Technical Specification
3^{rd} Generation Partnership Project;
Technical Specification Group Radio Access Network;
Multiplexing and channel coding (FDD)
(Release 5)",
Chapter 4.5 and Chapter 4.6,
[online],
January 7, 2003,
[search on January 15, 2003],
Internet
<URL: http://www.3gpp.org/ftp/Specs/archive/25 series/25.212/>

A channel multiplexing method in Release 5 is defined in detail in a technical specification TS 25.213 (the following non-patent document 3), Chapter 4 (Uplink spreading and modulation), and Chapter 5 (Downlink spreading and modulation).
Non-Patent Document 3
3^{rd} Generation Partnership Project,
"3GPP TS 25.213 V5.2.0 (2002-09)
Technical Specification
3^{rd} Generation Partnership Project;
Technical Specification Group Radio Access Network;
Spreading and modulation (FDD)
(Release 5)",
Chapter 4 and Chapter 5,
[online],
September 26, 2002,
[search on January 15, 2003],
Internet
<URL: http://www.3 gpp.org/ftp/Specs/archive/25 series/25.213/>

All kinds of channels of physical layers in Release 1999 are discussed by being included in Release 5.

Release 1999-compatible physical layer channels allocated independently to mobile stations are a DPCCH (Dedicated Physical Control CHannel) and a DPDCH (Dedicated Physical Data CHannel). The DPCCH is a channel for transmitting all kinds of control information (synchronizing pilot signal, transmitting power control signal, and the like) in the physical layer. The DPDCH is a channel for transmitting data (upper layer data) sent to the physical layer from a MAC layer that is a protocol layer above the physical layer. A channel used for sending the upper layer data from the MAC layer to the physical layer is called a transport channel.

Physical layer channels for downlink added in Release 5 for HSDPA are an HS-PDSCH (High Speed ― Physical Downlink Shared CHannel) and an HS-SCCH (High Speed ― Shared Control CHannel) both of which are shared channels. The HS-PDSCH is, like the Release 1999-compatible DPDCH, a channel for transmitting upper layer data sent to a physical layer from a MAC layer. The HS-SCCH is a channel for transmitting all kinds of control information (modulation scheme of transmission data, packet data size, and the like) when the upper layer data is transmitted from a base station to a mobile station through the HS-PDSCH.

The spreading factor of the HS-PDSCH is 16 (fixed value), which allows a plurality of spreading codes (namely a plurality of channels) to be allocated to a single mobile station at onetime transmission. Allocation control of the spreading codes (the so-called scheduling) takes place at the base station.

The spreading factor of the HS-SCCH is 256 (fixed value). The HS-SCCH is divided into three regions (part 1, part 2, CRC). The part 1 region includes HS-PDSCH code information (Channelization-code-set information), and an HS-PDSCH modulation scheme (Modulation scheme information). The part 2 region includes the whole data size of packets at onetime transmission (Transport-block size information), retransmission scheme information (Hybrid-ARQ process information), and new data determination display (New data indicator) (see the technical specification TS 25.212, Chapter 4.6).

A physical layer channel for uplink added for HSDPA is an HS-DPCCH (High Speed ― Dedicated Physical Control CHannel). The HS-DPCCH is a channel for transmitting a response (ACK/NACK) to data received from the base station, and so on. Data transmission from the base station to the mobile station is made with the HS-SCCH and the HS-PDSCH used in a pair. The mobile station determines whether there exist any errors in the data regarding the HS-SCCH and the HS-PDSCH transmitted from the base station, and transmits the determination result (ACK/NACK) to the base station through the HS-DPCCH.

A technical specification TS 25.308 (the following non-patent document 4), Chapter 5.2.2.1 (FDD Downlink Physical layer Model) notes that the number of HS-SCCHs that can be received simultaneously at each mobile station is 4 at the maximum. The actual number of channels allocated to each mobile station (≦ 4) is predetermined when HSDPA channels are established between the base station and the mobile station. Alternatively, the base station notifies the mobile station of a change in the number of channels during communication between the base station and the mobile station. However, the number of HS-SCCHs used for transmission at onetime data transmission timing is one.
Non-Patent Document 4
3^{rd} Generation Partnership Project,
"3GPP TS 25.308 V5.3.0 (2002-12)
Technical Specification
3^{rd} Generation Partnership Project;
Technical Specification Group Radio Access Network;
High Speed Downlink Packet Access (HSDPA);
Overall description; Stage 2
(Release 5)",
Chapter 5.2.2.1,
[online],
January 14, 2003,
[search on January 15, 2003],
Internet
<URL: httD://www.3gpp.org/ftp/Specs/archive/25 series/25.308/>

Further, a technical specification TS 25.214 (the following non-patent document 5), Chapter 6A.1.1 (UE procedure for receiving HS-DSCH) provides that a base station uses the same HS-SCCH when transmitting packets successively.
Non-Patent Document 5
3^{rd} Generation Partners ship Project,
"3GPP TS 25.214 V5.3.0 (2002-12)
Technical Specification
3^{rd} Generation Partnership Project;
Technical Specification Group Radio Access Network;
Physical layer procedures (FDD)
(Release 5)",
Chapter 6A.1.1,
[online],
January 14, 2003,
[search on January 15, 2003],
Internet
<URL: http://www.3gpp.org/ftp/Specs/archive/25 series/25.308/>

A technical specification TS 25.301 (the following non-patent document 6), Chapter 5.1 (Overall protocol structure) discusses the relationship of protocol layers in a radio access network (RAN). A first layer is a physical layer, a second layer is a MAC (Media Access Control) layer and an RLC (Radio link control) layer, and a third layer is an RRC (Radio Resource Control) layer.
Non-Patent Document 6
3^{rd} Generation Partners ship Project,
"3GPP TS 25.301 V5.2.0 (2002-09)
Technical Specification
3^{rd} Generation Partnership Project;
Technical Specification Group Radio Access Network;
Radio Interface Protocol Architecture
(Release 5)",
Chapter 5.1,
[online],
September 13, 2002,
[search on January 15, 2003],
Internet
<URL: http://www.3gpp.org/ftp/Specs/archive/25 series/25.301/>

The transmissions of all kinds of control information (allocation of radio resources such as maximum communication speed and the number of spreading codes, for example) from the base station to the mobile station are made by information transmitting means between the RRC layer in the base station and the RRC layer in the mobile station.

For example, information transmission from the MAC layer in the base station to the MAC layer in the mobile station is made as follows. First, information is sent from the MAC layer in the base station to the RRC layer in the base station, and then the information is transmitted as data from the RRC layer in the base station to the RRC layer in the mobile station, and subsequently from the RRC layer in the mobile station to the MAC layer in the mobile station.

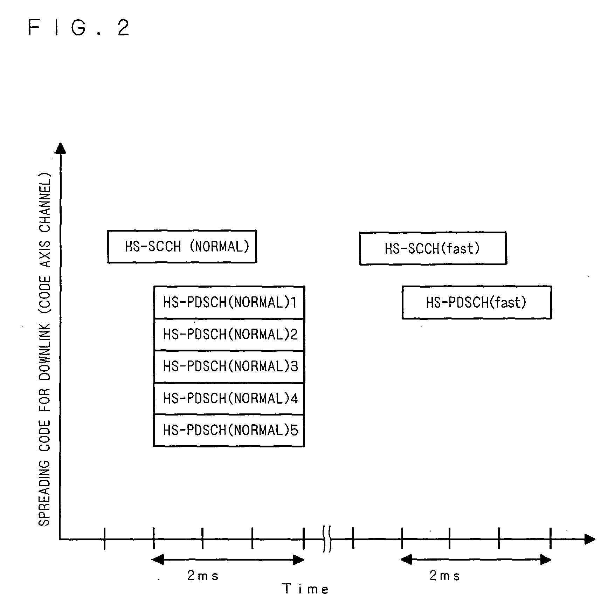

Referring to Fig. 2 in the technical specification TS 25.301, information from the MAC layer in the base station to the MAC layer in the mobile station is sent as control information from the MAC layer in the base station to the RRC layer in the base station, sent as data from the RRC layer in the base station to the RLC layer in the base station, sent as data from the RLC layer in the base station to the MAC layer in the base station, sent as data from the MAC layer in the base station to the physical layer in the base station, and sent as data from the physical layer in the base station to the physical layer in the mobile station. The mobile station performs a reverse process to that by the base station. That is, the information received from the base station is sent as data from the physical layer to the MAC layer, sent as data from the MAC layer to the RRC layer, and sent as control information from the RRC layer to the MAC layer. Here, the process at each RRC layer in the base station and the mobile station is merely to provide means (container) for transmission and reception, and not a process such as information processing and the like being performed at each RRC layer.

Also when the MAC layer in the base station controls the state of the physical layer in the mobile station, in the same fashion as the above, control information from the MAC layer in the base station is sent to the MAC layer in the mobile station through the process as data transmitting and receiving means between the respective RRC layers in the base station and the mobile station. Then, the data sent to the MAC layer in the mobile station is sent as a physical layer control signal to the physical layer in the mobile station, and the physical layer in the mobile station changes settings on the state based on the physical layer control signal.

Moreover, when the RRC layer in the base station controls the state of the physical layer in the mobile station, control information generated at the RRC layer in the base station is input as data to the MAC layer in the base station, sent from the MAC layer in the base station to the RRC layer in the mobile station, and sent as physical layer control information from the RRC layer in the mobile station to the physical layer in the mobile station. Then, the physical layer in the mobile station sets the state based on the physical layer control signal.

With regard to HSDPA, control information for controlling a mobile station by a base station includes: 1) the setting of the whole HS-SCCHs into to-be-received channels (HS-SCCH set to be monitored), 2) the number of repetitions of a response (ACK/NACK) transmitted from the mobile station to the base station (Repetition factor of ACK/NACK; N_acknack_transmit), 3) a down propagation environment indicator transmitted from the mobile station to the base station (Channel Quality Indicator (CQI); feedback cycle k), 4) the number of CQI repetitions (N_cqi_transmit), and 5) the amount of power offset used for deriving CQI at the mobile station (Measurement power offset), which are indicated in the technical specification TS 25.214, Chapter 6A.1 (General procedure), and the amount of HS-DPCCH power offset (Δ HS-DPCCH) at the time of transmission, which is indicated in the same specification, Chapter 5.1.2.5A (Setting of the uplink DPCCH/HS-DPCCH power difference), and so on.

Now, problems associated with conventional techniques will be explained, taking the setting of the whole HS-SCCHs into to-be-received channels as an example.

In HSDPA, packetized data is transmitted and received between a base station and a mobile station. When usage patterns in browsing the Internet and the like are imagined, the time not spent in transmitting and receiving packets (which includes the time during which a user browses a screen after packet data of one block corresponding to a single display screen was sent) is much longer than the time actually spent in transmitting and receiving packets.

When packet data is transmitted successively from the base station to the mobile station, the mobile station only needs to set one HS-SCCH into a state that can be received. However, once packet transmission has been interrupted in downlink, whether the next packet is to be transmitted, or which one of the HS-SCCHs is to be used, are not defined by the standards, but may be chosen freely by the base station. For this reason, when packet transmission from the base station has been interrupted, the mobile station needs to set all of a plurality of predetermined HS-SCCHs into a state that can be received. In such ways, conventional communication systems need to increase the receiving ability of the mobile station when packet data is not transmitted and received, which results in a large amount of power consumption.

Moreover, the number of to-be-received HS-SCCHs allocated to a single mobile station is controllable by the MAC layer in the base station. Accordingly, notification of control information on the number of to-be-received channels from the base station to the mobile station, by the data transmitting means through the process at each RRC layer in the base station and the mobile station in accordance with the standards, enables the mobile station to change the number of to-be-received HS-SCCHs. However, the process at the RRC layer requires relatively long time (approximately 100 ms). Besides, the process at the RRC layer must be performed in both the base station and the mobile station, which actually takes processing time twice as long, and results in long processing delay. On the other hand, an increase of the processing abilities of the RRC layers in order to shorten the processing delay carries with it increases in complexity of the device and the circuit scale, both in the base station and the mobile station.

Likewise, because a quick change to an optimum amount of offset in accordance with a propagation environment cannot be made with regard to the amount of HS-DPCCH power offset (Δ HS-DPCCH), transmission may be made with redundant power so that interference is increased thus decreasing transmission capacity and throughput, or conversely, transmission may be made with insufficient power so that the ACK/NACK fails to reach the base station thus increasing the number of data retransmissions.

In such ways, by transmitting all kinds of mobile-station-control information sent from an upper protocol layer than the MAC layer in the base station through the RRC layer process in the base station or the mobile station, control delay becomes longer, which in turn hampers the optimization of mobile station control, improvement in throughput, reduction of power consumption, and so on.

### Disclosure of Invention

It is an object of the present invention to solve such problems as mentioned above, and obtain a communication system, a transmitting station, and a receiving station capable of reducing control delay to a mobile station without increases in processing delay and complexity of the device.

A communication system according to the present invention includes: a transmitting station including a first physical layer process section, a first MAC layer process section, a first RLC layer process section, and a first RRC layer process section; a receiving station including a second physical layer process section, a second MAC layer process section, a second RLC layer process section, and a second RRC layer process section; and an HS-SCCH and an HS-PDSCH connecting between the transmitting station and the receiving station, wherein the transmitting station transmits control information for controlling the receiving station to the receiving station through the HS-PDSCH without making the control information go through a process by the first RRC layer process section, and the receiving station performs a prescribed process based on the control information received from the transmitting station without making the control information go through a process by the second RRC layer process section.

Therefore, control delay to the receiving station can be reduced without increases in processing delay and complexity of the device.

The transmitting station according to the present invention includes: a physical layer process section; a MAC layer process section; an RLC layer process section; and an RRC layer process section, and transmits control information for controlling a receiving station to the receiving station through a prescribed channel without making the control information go through a process by the RRC layer process section.

Therefore, control delay to the receiving station can be reduced without increases in processing delay and complexity of the device.

The receiving station according to the present invention includes: a physical layer process section, a MAC layer process section, an RLC layer process section, and an RRC layer process section, and performs a prescribed process based on control information received from a transmitting station through a prescribed channel without making the control information go through a process by the RRC layer process section.

Therefore, control delay to the receiving station can be reduced without increases in processing delay and complexity of the device.

These and other objects, features, aspects and advantages of the present invention will become more apparent from the following detailed description of the present invention when taken in conjunction with the accompanying drawings.

### Brief Description of Drawings

Fig. 1 is a schematic view illustrating the general structure of a communication system according to a first preferred embodiment of the present invention.
Fig. 2 relates to the communication system according to the first preferred embodiment of the present invention, which is a timing chart illustrating transmission timing of HSDPA-compatible channels.
Fig. 3 relates to the communication system according to the first preferred embodiment of the present invention, illustrating the format of HS-PDSCH (fast).
Fig. 4 relates to the communication system according to the first preferred embodiment of the present invention, illustrating a method of notifying a mobile station that control information on the number of to-be-received HS-SCCHs is being transmitted through the HS-PDSCH (fast).
Fig. 5 relates to the communication system according to the first preferred embodiment of the present invention, which is a preparation flow of HS-SCCH (normal) and HS-SCCH (fast).
Fig. 6 relates to the communication system according to the first preferred embodiment of the present invention, which is a block diagram illustrating the device structure of a base station.
Fig. 7 relates to the communication system according to the first preferred embodiment of the present invention, which is a flowchart illustrating a process flow in which a MAC-hs process section determines the sequence of transmission.
Fig. 8 relates to the communication system according to the first preferred embodiment of the present invention, which is a block diagram illustrating the device structure of the mobile station.
Fig. 9 relates to the communication system according to the first preferred embodiment of the present invention, which is a flowchart illustrating a process flow at an HSDPA physical layer process block and a MAC-hs process block.
Fig. 10 relates to a communication system according to a second preferred embodiment of the present invention, which is a timing chart illustrating transmission timing of the HSDPA-compatible channels.
Fig. 11 relates to the communication system according to the second preferred embodiment of the present invention, which is flowcharts illustrating process flows of HS-PDSCHs by the HSDPA physical layer process block.
Fig. 12 relates to the communication system according to the second preferred embodiment of the present invention, which is a flowchart illustrating a process flow in which the MAC-hs process section determines the sequence of transmission.
Fig. 13 relates to the communication system according to the second preferred embodiment of the present invention, which is a flowchart illustrating a process flow at the HSDPA physical layer process block and the MAC-hs process block.
Fig. 14 relates to the communication system according to the second preferred embodiment of the present invention, which is a flowchart illustrating a process flow at the HSDPA physical layer process block and the MAC-hs process block.
Fig. 15 relates to a communication system according to a third preferred embodiment of the present invention, which is a timing chart illustrating transmission timing of the HSDPA-compatible channels.
Fig. 16 relates to the communication system according to the third preferred embodiment of the present invention, which is a flowchart illustrating a process flow of HS-PDSCH (normal + fast) by the HSDPA physical layer process block.
Fig. 17 relates to a communication system according to a fourth preferred embodiment of the present invention, which is a preparation flow of HS-SCCH (normal) and HS-SCCH (fast).

### Best Modes for Carrying Out the Invention

Preferred embodiments of the present invention will be explained below, taking a case as an example where control information for controlling a mobile station by a base station is control information on the number of to-be-received HS-SCCHs.

### 1. First Preferred Embodiment

A communication system according to a first preferred embodiment of the present invention will be explained below. The term "channel" used in the following explanation refers to either a communication path, or information or data being communicated.

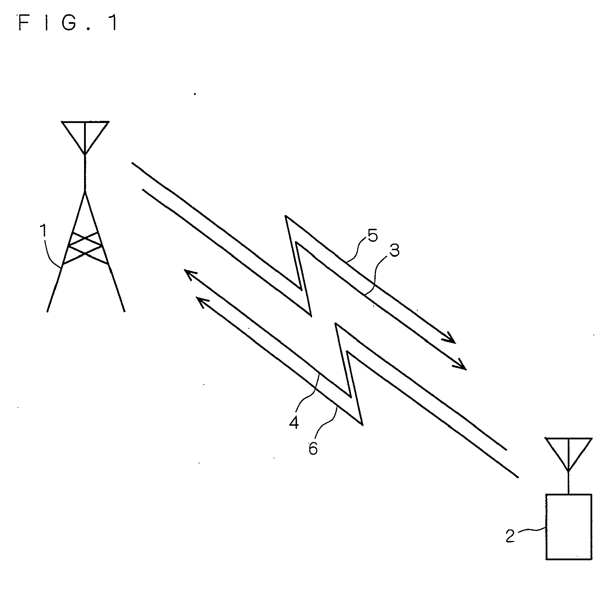

Fig. 1 is a schematic view illustrating the general structure of the communication system according to the first preferred embodiment of the present invention. The communication system includes a base station 1, a mobile station 2, and downlinks 3, 5 and uplinks 4, 6 for connecting between the base station 1 and the mobile station 2. The downlink 3 is the Release 1999-compatible downward channels (DPCCH and DPDCH). The uplink 4 is the Release 1999-compatible upward channels (DPCCH and DPDCH). The downlink 5 is the HSDPA-compatible downward channels (HS-SCCH and HS-PDSCH) added in Release 5. The uplink 6 is the HSDPA-compatible upward channel (HS-DPCCH) added in Release 5. Among Release 1999-compatible channels, descriptions of those that are shared by a plurality of the mobile stations 2 communicating with the base station 1 are omitted.

The base station 1 transmits information for controlling the number of HS-SCCHs that should be set into a state that can be received by the mobile station 2 (control information on the number of to-be-received HS-SCCHs) to the mobile station 2 through the HS-PDSCH, without making the information go through a process by an RRC layer in the base station 1. The HS-PDSCH in this case will be referred to as "HS-PDSCH (fast)" below in this specification. Notifying information indicating that the control information on the number of to-be-received HS-SCCHs is being transmitted from the base station 1 is transmitted from the base station 1 to the mobile station 2 through the HS-SCCH. The HS-SCCH in this case will be referred to as "HS-SCCH (fast)" below in this specification.

The base station 1 also transmits data (upper layer data or normal data) sent to a physical layer from an upper protocol layer than the physical layer to the mobile station 2 through the HS-PDSCH. The HS-PDSCH in this case will be referred to as "HS-PDSCH (normal)" below in this specification. Notifying information indicating that the upper layer data is being transmitted from the base station 1 is transmitted from the base station 1 to the mobile station 2 through the HS-SCCH. The HS-SCCH in this case will be referred to as "HS-SCCH (normal)" below in this specification.

The HS-PDSCH (normal) and HS-SCCH (normal) are transmitted by radio in a pair to the mobile station 2 through the downlink 5. Likewise, the HS-PDSCH (fast) and HS-SCCH (fast) are transmitted by radio in a pair to the mobile station 2 through the downlink 5.

The mobile station 2 determines whether HS-SCCH received from the base station 1 is HS-SCCH (normal) or HS-SCCH (fast), and with HS-SCCH (normal), processes HS-PDSCH (normal) as in the case of a conventional receiving process. On the other hand, with HS-SCCH (fast), the mobile station 2 performs a receiving process as HS-PDSCH (fast), thereby changing the set value of the number of to-be-received HS-SCCHs.

The mobile station 2 also determines whether there exist any errors in the data regarding HS-PDSCH (normal) or HS-PDSCH (fast) received from the base station 1, and transmits by radio an ACK signal or an NACK signal in accordance with the determination result to the base station 1 through the uplink 6 (HS-DPCCH).

Fig. 2 is a timing chart illustrating transmission timing of the HSDPA-compatible channels in the downlink 5 shown in Fig. 1. Fig. 2 shows packets (HS-PDSCHs (normal)) corresponding to upper layer data and a packet (HS-PDSCH (fast)) corresponding to the control information on the number of to-be-received HS-SCCHs being multiplexed with spreading codes, and transmitted by radio from the base station 1 to the mobile station 2 through the HS-PDSCH which is a physical layer shared channel. In the communication system according to the first preferred embodiment, the control information on the number of to-be-received HS-SCCHs is transmitted at different timing from that of transmitting the upper layer data.

It is required that the mobile station 2 know in advance the number of spreading codes (namely the number of multiplexing) and a modulation scheme that are used at onetime transmission of HS-PDSCH before receiving the HS-PDSCH. Accordingly, HS-SCCH is transmitted ahead of HS-PDSCH from the base station 1 to the mobile station 2 so that the part 1 region of the HS-SCCH is demodulated ahead of the HS-PDSCH.

In the Fig. 2 example, HS-PDSCHs (normal) are transmitted simultaneously with five spreading codes. On the other hand, HS-PDSCH (first) is transmitted with only one spreading code, since the transmission bits required for transmitting the control information on the number of to-be-received HS-SCCHs to the mobile station 2 are small in number. Further in Fig. 2, the control information on the number of to-be-received HS-SCCHs (HS-PDSCH (fast)) and the upper layer data (HS-PDSCH (normal) 1) are transmitted through the same HS-PDSCH. Namely, the HS-PDSCH (fast) is transmitted with one of the five spreading codes used for transmitting the HS-PDSCHs (normal).

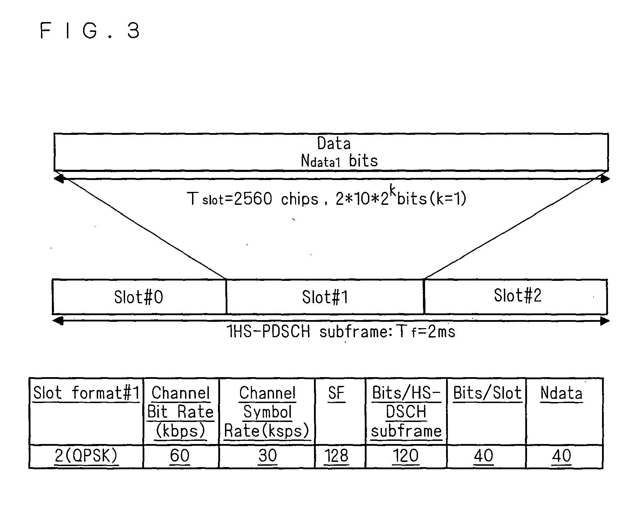

Since the bits for the control information on the number of to-be-received HS-SCCHs are small in number, the spreading factor (SF) of HS-PDSCH (fast) can be set greater than that of HS-PDSCH (normal). Fig. 3 exemplifies the slot format of HS-PDSCH (fast) in this case. In the Fig. 3 example, the spreading factor of HS-PDSCH (fast) is 128. Referring to Table 26 in the technical specification TS 25.211, the spreading factor of HS-PDSCH (normal) is 16. With the great spreading factor, HS-PDSCH (fast) easily secures Eb/No, which is an S/N ratio required for reception at the mobile station 2. Accordingly, even under an environment with the same radio wave condition in downlink, HS-PDSCH (fast) requires smaller transmission power than HS-PDSCH (normal). Therefore, different transmission powers can be set for HS-PDSCH (fast) and HS-PDSCH (normal), respectively. The transmission powers may be set using an absolute value, or using an offset value with reference to a certain channel.

Besides, in Fig. 2, the HS-PDSCH (fast) is used as a container for accommodating data to be transmitted, like the HS-PDSCH (normal). Therefore, the HS-PDSCH (normal) and HS-PDSCH (fast) may be considered as the same channel actually, although being separated from each other in Fig. 2 for the convenience of explanation.

Note that since the bits required for transmitting the control information on the number of to-be-received HS-SCCHs are small in number, the number of transmission bits (fixed value) smaller than that for the HS-PDSCH (normal) is additionally defined, as shown in Fig. 3. By setting the number of transmission bits for the HS-PDSCH (fast) as a fixed value and notifying the mobile station 2 of the number of transmission bits in advance, it is unnecessary anymore to notify the mobile station 2 of the number of transmission bits at every HS-PDSCH (fast) transmission. This avoids an increase in complexity of the base station 1 and mobile station 2.

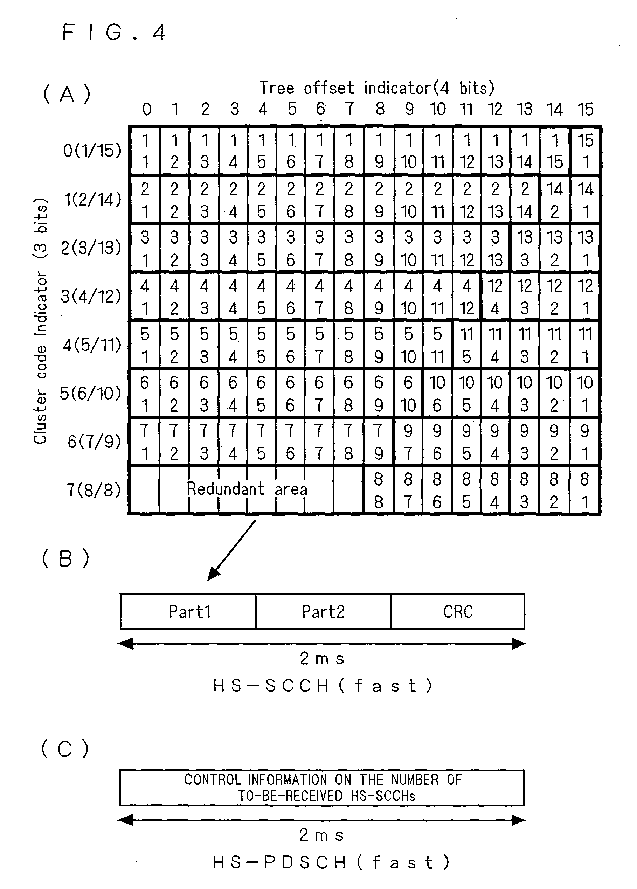

Fig. 4 illustrates a method of notifying the mobile station 2 that the control information on the number of to-be-received HS-SCCHs is being transmitted through HS-PDSCH (fast).

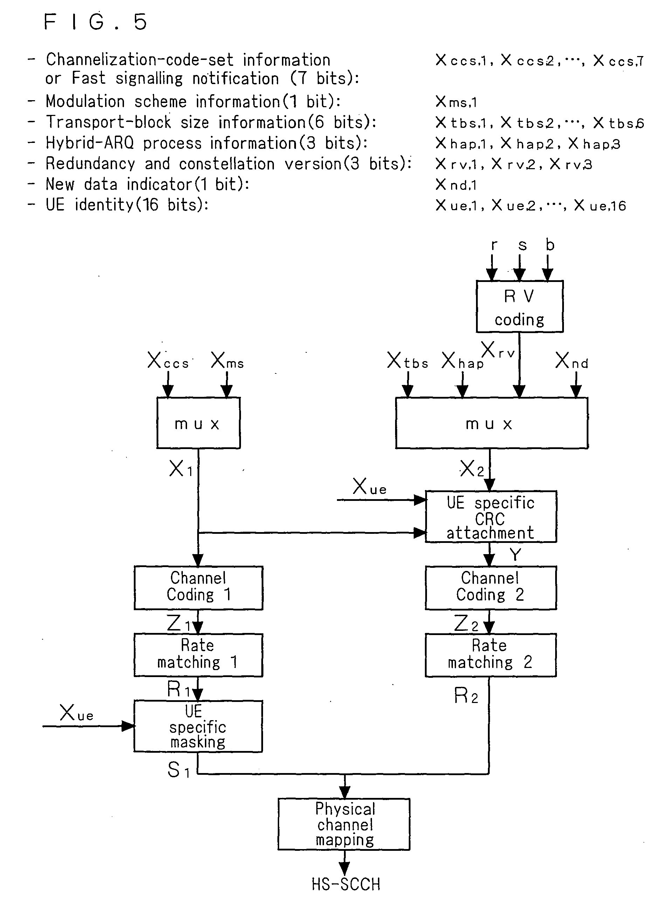

(B) of Fig. 4 illustrates the format of HS-HCCH (fast). Although it appears from the Fig. 4B illustration that the format of HS-HCCH (fast) is different from that of HS-SCCH (normal) described in the technical specification TS 25.211, reference to the later described Fig. 5 will prove that they are equal in terms of contents, so a detailed explanation thereof is omitted here.

(C) of Fig. 4 illustrates the control information on the number of to-be-received HS-SCCHs being transmitted through HS-PDSCH (fast).

(A) of Fig. 4 illustrates combinations of 7 bits with regard to CCS (Channelization-Code-Set) information described in the part 1 region of HS-SCCH. The CCS information is allocation information about spreading codes used at the time of HS-PDSCH transmission. The vertical axis of (A) of Fig. 4 represents combinations of the first 3 bits, and the horizontal axis combinations of the latter 4 bits. The upper number within a box represents the number of spreading codes used at onetime transmission. The lower number within a box represents an offset position (1 to 15) in designating the spreading codes. The vertical axis of 3 and the horizontal axis of 4, for example, indicates that 4 spreading codes are used at onetime transmission, and the head of offset in designating those spreading codes begins from the fifth. Namely, in this case, the fifth to eighth spreading codes are used among the spreading codes with a spreading factor of 16.

As can be seen from (A) of Fig. 4, there exist bit combinations (Redundant Area) not used at the time of upper layer data transmission. When the CCS information of HS-SCCH is a combination within the Redundant Area, the mobile station 2 determines that not upper layer data but the control information on the number of to-be-received HS-SCCHs is being transmitted, and performs a receiving process accordingly. Note that since the offset positions of spreading codes correspond to 1 to 8 with regard to the Redundant Area, when transmitting HS-PDSCH (fast), the base station 1 designates in this range (1 to 8) the instruction value of offset position of spreading codes to be used.

By doing so, it is possible to notify the mobile station 2 that the control information on the number of to-be-received HS-SCCHs is being transmitted only by a change in interpretation of the CCS information, without the need to provide additional bits for it, which requires little design change to the mobile station 2.

Fig. 5 is a preparation flow of HS-SCCH (normal) and HS-SCCH (fast) including a case where the control information on the number of to-be-received HS-SCCHs can be transmitted using the Redundant Area. This preparation flow is different from the flow described in the technical specification TS 21.212 only in that notification that the control information on the number of to-be-received HS-SCCHs is present (Fast Signalling Notification) can be input at the step of inputting the CCS.

HS-SCCH is prepared by using a bit combination like a conventional one for the CCS when transmitting upper layer data, or by using a bit combination within the Redundant Area when transmitting the control information on the number of to-be-received HS-SCCHs. The remaining process is the same as the process flow defmed in the technical specification TS 25.212, so an explanation thereof is omitted here.

As discussed above, the channel structure of HS-SCCH is no different from conventional techniques, only interpretation of the CCS is added. Therefore, the mobile station 2 is capable of performing a receiving process as in the case of conventional techniques with little increase in complexity of the HS-SCCH receiving device included therein.

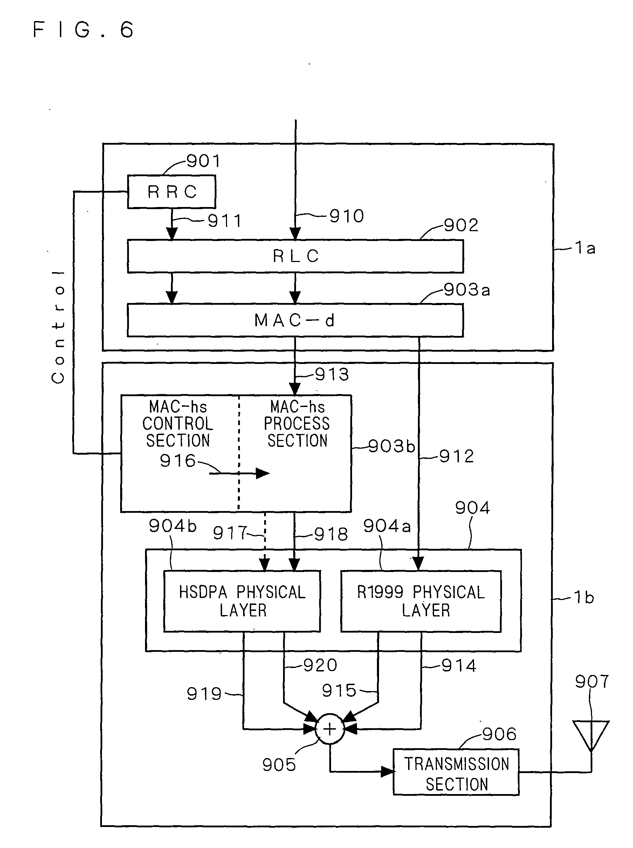

Fig. 6 is a block diagram illustrating the device structure of the base station 1 according to the first preferred embodiment. The present invention is concerned with downlink, and is no different in uplink from conventional techniques. In Fig. 6, disclosure of process blocks unnecessary for explaining the present invention is omitted.

The base station 1 includes a radio network controller (RNC) 1 a and a base station device (Node-B) 1b. The radio network controller 1a includes an RRC layer process block 901, an RLC layer process block 902, and a MAC-d layer process block 903a. The base station device 1b includes a MAC-hs layer process block 903b and a physical layer process block 904. Unlike Release 1999-compatible devices, when Release 5-compatible HSDPA is adopted, a MAC layer process block is divided into the MAC-d layer process block 903a and MAC-hs layer process block 903b, as shown in Fig. 6. The allocation of the number of to-be-received HS-SCCHs to each mobile station 2 takes place at the MAC-hs layer process block 903b.

First, in the radio network controller 1a, data 910 sent from an upper protocol layer than an RRC layer is input to the RLC layer process block 902. Data 911 sent from the RRC layer process block 901 is also input to the RLC layer process block 902. The data 910 and 911 are output from the RLC layer process block 902, and input to the MAC-d layer process block 903a.

Data 912 to be transmitted to the mobile station 2 using the Release 1999-compatible physical layer channel (DPDCH) is output from the MAC-d layer process block 903a, input to an R1999 physical layer process block 904a, and then subjected to a prescribed process by the R1999 physical layer process block 904a to become DPDCH 914, which is sent to a channel multiplexer 905.

On the other hand, data 913 to be transmitted to the mobile station 2 using the HSDPA-compatible channel (HS-PDSCH) is output from the MAC-d layer process block 903a, and input to a MAC-hs process section within the MAC-hs layer process block 903b. Data 918 output from the MAC-hs process section is subjected to a prescribed process by an HSDPA physical layer process block 904b to become HS-PDSCH 920. HS-PDSCH (normal) is thus obtained. The HS-PDSCH 920 is sent to the channel multiplexer 905. The transmission timing and modulation method are determined by the MAC-hs process section, and an Associated Signalling 917 is input to the HSDPA physical layer process block 904b. The HSDPA physical layer process block 904b generates and outputs HS-SCCH 919 based on the Associated Signalling 917. The HS-SCCH 919 is sent to the channel multiplexer 905.

Channel output from the channel multiplexer 905 is converted into a radio frequency signal by known techniques at a transmission section 906, and then transmitted by radio from an antenna 907 toward the mobile station 2.

The above operation is no different from conventional techniques.

Next, operation of transmitting control information on the number of to-be-received HS-SCCHs 916 will be explained. The control information on the number of to-be-received HS-SCCHs 916 generated by a Mac-hs control section is sent to the MAC-hs process section. The MAC-hs process section compares priorities between the data 913 sent from the upper layer and the control information on the number of to-be-received HS-SCCHs 916. The MAC-hs process section then determines transmission timing, a modulation method, and so on, and notifies the HSDPA physical layer process block 904b of the control information on the number of to-be-received HS-SCCHs 916 as the Associated Signalling 917. The HSDPA physical layer process block 904b prepares the CCS information using a bit combination within the Redundant Area, as shown in Figs. 4 and 5, and sets the information in the part 1 region of HS-SCCH. HS-SCCH (fast) is thus obtained.

Subsequently, the control information on the number of to-be-received HS-SCCHs 916 is input as data 918 from the MAC-hs process section to the HSDPA physical layer process block 904b. The data 918 is subjected to a prescribed process by the HSDPA physical layer process block 904b to become HS-PDSCH 920. HS-PDSCH (fast) is thus prepared.

The HS-PDSCH (fast) is multiplexed with the HS-PDSCH (normal) by the channel multiplexer 905, as shown in Fig. 2, and transmitted by radio toward the mobile station 2 through the transmission section 906 and antenna 907.

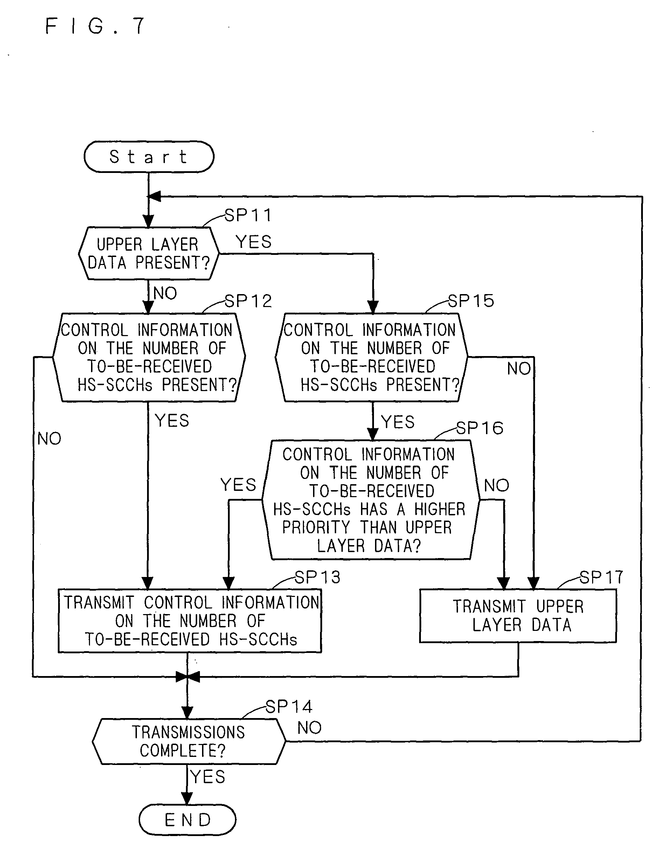

Fig. 7 is a flowchart illustrating a process flow in which the MAC-hs process section shown in Fig. 6 determines the sequence of transmission.

First, at step SP11, the MAC-hs process section determines whether the data 913 from the upper layer that needs to be transmitted is present.

When the data 913 from the upper layer that needs to be transmitted is not present (namely, when the determination result at step SP11 is "NO"), the MAC-hs process section proceeds to step SP12, and determines whether the control information on the number of to-be-received HS-SCCHs 916 has been input from the MAC-hs control section.

When the control information on the number of to-be-received HS-SCCHs 916 has not been input (namely, when the determination result at step SP12 is "NO"), the MAC-hs process section proceeds to step SP 14, and determines whether transmissions are complete.

When the control information on the number of to-be-received HS-SCCHs 916 has been input as a result of the determination at step SP12 (namely, when the determination result at step SP12 is "YES"), the MAC-hs process section proceeds to step SP13, and sends the control information on the number of to-be-received HS-SCCHs 916 , to the HSDPA physical layer process block 904b. Consequently, HS-PDSCH (fast) is transmitted to the mobile station 2. Subsequently, the MAC-hs process section determines whether the transmissions are complete at step SP14.

When the data 913 from the upper layer that needs to be transmitted is present as a result of the determination at step SP11 (namely, when the determination result at step SP11 is "YES"), the MAC-hs process section proceeds to step SP15, and determines whether the control information on the number of to-be-received HS-SCCHs 916 has been input from the MAC-hs control section.

When the control information on the number of to-be-received HS-SCCHs 916 has not been input (namely, when the determination result at step SP15 is "NO"), the MAC-hs process section proceeds to step SP17, and sends the data 913 from the upper layer to the HSDPA physical layer process block 904b. Consequently, HS-PDSCH (normal) is transmitted to the mobile station 2. Subsequently, the MAC-hs process section determines whether the transmissions are complete at step SP14.

When the control information on the number of to-be-received HS-SCCHs 916 has been input as a result of the determination at step SP15 (namely, when the determination result at step SP15 is "YES"), the MAC-hs process section proceeds to step SP16, and determines which one of the data 913 from the upper layer and the control information on the number of to-be-received HS-SCCHs 916 should be transmitted with a higher priority. Namely, it is determined whether the control information on the number of to-be-received HS-SCCHs 916 has a higher priority than the data 913 from the upper layer.

When the control information on the number of to-be-received HS-SCCHs 916 is transmitted with a higher priority, (namely, when the determination result at step SP16 is "YES"), the MAC-hs process section proceeds to step SP13, and sends the control information on the number of to-be-received HS-SCCHs 916 to the HSDPA physical layer process block 904b. Consequently, HS-PDSCH (fast) is transmitted to the mobile station 2. Subsequently, the MAC-hs process section determines whether the transmissions are complete at step SP14.

When the data 913 from the upper layer is transmitted with a higher priority, (namely, when the determination result at step SP16 is "NO"), the MAC-hs process section proceeds to step SP17, and sends the data 913 from the upper layer to the HSDPA physical layer process block 904b. Consequently, HS-PDSCH (normal) is transmitted to the mobile station 2. Subsequently, the MAC-hs process section determines whether the transmissions are complete at step SP14.

When all transmissions are not complete as a result of the determination at step SP14 (namely, when the determination result at step SP14 is "NO"), the MAC-hs process section returns to step SP11. On the other hand, when all transmissions are complete (namely, when the determination result at step SP14 is "YES"), the process is finished.

For example, when the data 913 from the upper layer and the control information on the number of to-be-received HS-SCCHs 916 are present, and the data 913 from the upper layer is transmitted with a higher priority, the respective processes at steps SP11, SP 15, SP 16, SP 17, and SP 14 are performed in this order, the timing chart in this case following that shown in Fig. 2.

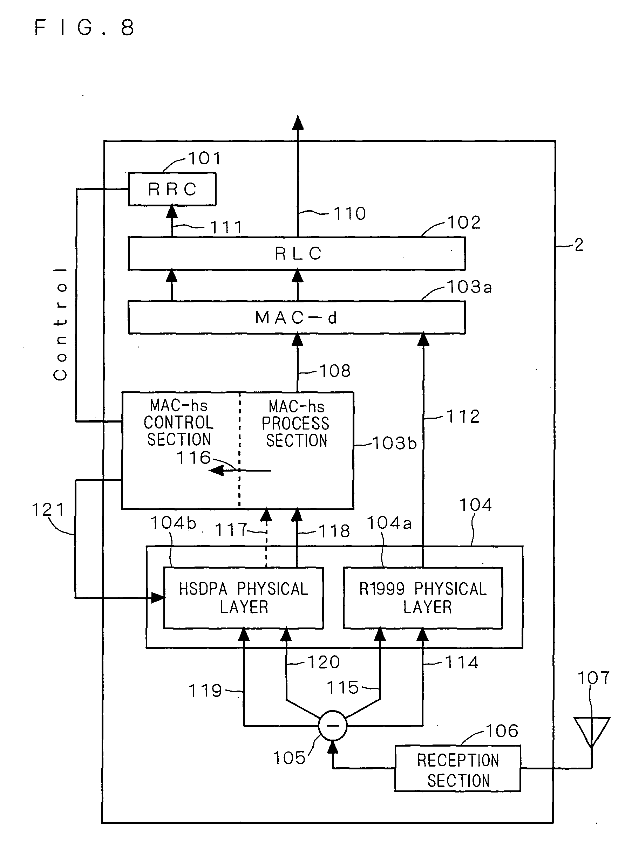

Fig. 8 is a block diagram illustrating the device structure of the mobile station 2 according to the first preferred embodiment. Like the base station 1 shown in Fig. 6, there is no difference in uplink from conventional techniques, and disclosure of process blocks unnecessary for explaining the present invention is omitted in Fig. 8. And the flow of operation compatible with the Release 1999 standards is the same as that in the base station 1 shown in Fig. 6, only reverse, so an explanation of the operation is omitted. Thus, HSDPA-related structure and operation will be explained below.

Also in the first preferred embodiment, the control information on the number of to-be-received HS-SCCHs is transmitted by a change in interpretation of the CCS part of HS-SCCH. Thus the device structure of the mobile station 2 is the same as that of conventional techniques, so channel will be explained without a particular distinction between "normal" and "fast".

The mobile station 2 includes an RRC layer process block 101, an RLC layer process block 102, a MAC-d layer process block 103a, a MAC-hs layer process block 103b, and a physical layer process block 104.

The signal transmitted by radio from the antenna 907 of the base station 1 is received by an antenna 107 of the mobile station 2, then demodulated by known techniques at a reception section 106, and then further separated into respective channels by code separation at a channel separation section 105.

HS-SCCH 119 and HS-PDSCH 120 are processed by an HSDPA physical layer process block 104b. The HS-SCCH 119 is received ahead of the HS-PDSCH 120 in terms of reception timing. The HSDPA physical layer process block 104b decodes the CCS information described in the part 1 region of the HS-SCCH 119, and determines whether the CCS information is a conventional bit combination or a bit combination within the Redundant Area.

When the CCS information is a conventional bit combination (namely when upper layer data is received), data 118 from the HS-PDSCH is input from the HSDPA physical layer process block 104b to a MAC-hs process section. Data 108 output from the MAC-hs process section goes through the MAC-d layer process bock 103a and the RLC layer process block 102 in this order, and is sent to an upper protocol layer as upper layer data 110.

On the other hand, when the CCS information is a bit combination within the Redundant Area (namely when the control information on the number of to-be-received HS-SCCHs is received), the data 118 taken out from the HS-PDSCH 120 by the HSDPA physical layer process block 104b is sent as control information on the number of to-be-received HS-SCCHs 116 from the MAC-hs process section to a MAC-hs control section. The control information on the number of to-be-received HS-SCCHs 116 is sent, as one of control information for controlling the physical layer, from the MAC-hs control section to the HSDPA physical layer process block 104b through a physical layer control line 121. The HSDPA physical layer process block 104b changes settings on the number of to-be-received HS-SCCHs based on the control information on the number of to-be-received HS-SCCHs 116.

The time required for onetime transmission of the HS-SCCH 119 and HS-PDSCH 120 is relatively short (approximately 2 msec). And the time required for processing those by the MAC-hs layer process block 103b and physical layer process block 104 is also relatively short (msec-order). Therefore, control information (the control information on the number of to-be-received HS-SCCHs in the above example) can be transmitted at high speed from the base station 1 to the mobile station 2, when compared to a case of processing the HS-SCCH 119 and HS-PDSCH 120 through a process by the RRC layer process block 101.

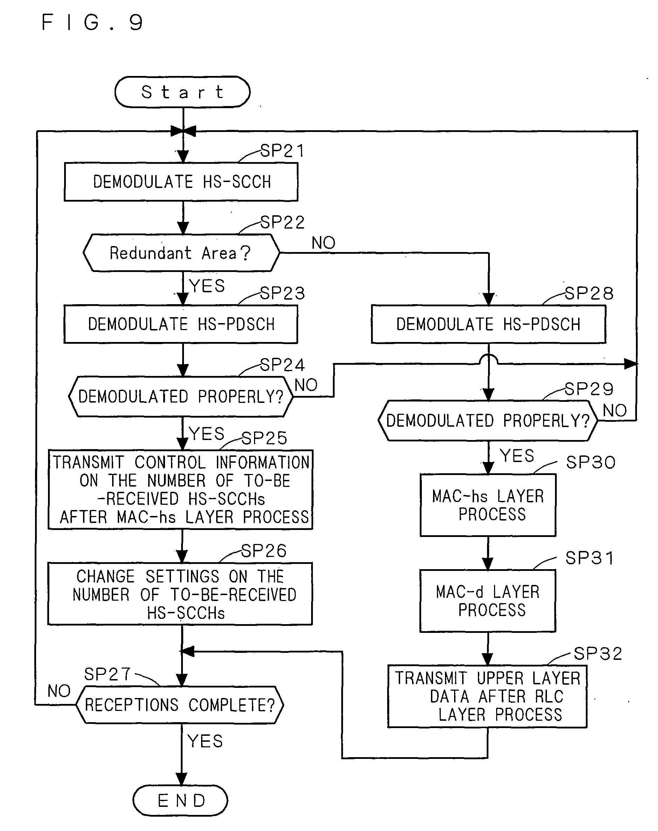

Fig. 9 is a flowchart illustrating a process flow at the HSDPA physical layer process block 104b and MAC-hs process block 103b shown in Fig. 8.

First, at step SP21, the HSDPA physical layer process block 104b demodulates the HS-SCCH 119, and then at step SP22, determines whether the CCS information described in the part 1 region of the HS-SCCH 119 is a bit combination within the Redundant Area. Namely, it is determined whether the received HS-SCCH 119 is HS-SCCH (normal) or HS-SCCH (fast).

When the CCS information is a bit combination within the Redundant Area (namely, when the determination result at step SP22 is "YES"), the HSDPA physical layer process block 104b proceeds to step SP23, and demodulates the HS-PDSCH 120 in accordance with all kinds of information (information about the data size, modulation scheme, and so on of the HS-PDSCH 120) included in the HS-SCCH 119.

Next, at step SP24, the HSDPA physical layer process block 104b determines whether the HS-PDSCH 120 has been demodulated properly.

When the HS-PDSCH 120 has been demodulated properly (namely, when the determination result at step SP24 is "YES"), the HSDPA physical layer process block 104b proceeds to step SP25, and sends the data 118 obtained by the demodulation to the MAC-hs layer process block 103b. In the MAC-hs layer process block 103b, the control information on the number of to-be-received HS-SCCHs 116 is sent from the MAC-hs process section to the MAC-hs control section. The control information on the number of to-be-received HS-SCCHs 116 is further sent from the MAC-hs control section to the HSDPA physical layer process block 104b.

Next, at step SP26, the HSDPA physical layer process block 104b changes settings on the number of to-be-received HS-SCCHs based on the control information on the number of to-be-received HS-SCCHs 116.

Next, at step SP27, it is determined whether the receptions of the HS-SCCH 119 and HS-PDSCH 120 are complete.

On the other hand, when the CCS information is a conventional bit combination as a result of the determination at step SP22 (namely, when the determination result at step SP22 is "NO"), the HSDPA physical layer process block 104b proceeds to step SP28, and demodulates the HS-PDSCH 120 in accordance with all kinds of information (information about the data size, modulation scheme, and so on of the HS-PDSCH 120) included in the HS-SCCH 119.

Next, at step SP29, the HSDPA physical layer process block 104b determines whether the HS-PDSCH 120 has been demodulated properly.

When the HS-PDSCH 120 has been demodulated properly (namely, when the determination result at step SP29 is "YES"), a process by the MAC-hs layer process block 103b (step SP30), and a process by the MAC-d layer process block 103a (step SP31) are performed in this order. Next, a process by the RLC layer process block 120 is performed at step SP32, and then the upper layer data 110 is sent to an upper protocol layer. Next, at step SP27, it is determined whether the receptions of the HS-SCCH 119 and HS-PDSCH 120 are complete.

When the HS-PDSCH 120 has not been demodulated properly as a result of the determinations at steps SP24 and SP29 (namely, when the determination results at steps SP24 and SP29 are "NO"), the HSDPA physical layer process block 104b returns to step SP21.

When all receptions are not complete as a result of the determination at step SP27 (namely, when the determination result at step SP27 is "NO"), the HSDPA physical layer process block 104b returns to step SP21. On the other hand, when all transmissions are complete (namely, when the determination result at step SP27 is "YES"), the process is finished.

Although not shown in Fig. 9, when the HS-PDSCH 120 has been demodulated properly at steps SP23 and SP28, the mobile station 2 transmits the ACK signal to the base station 1 through HS-DPCCH. When it has not been demodulated properly, the NACK signal is transmitted.

As discussed above, according to the communication system of the first preferred embodiment, control information (the control information on the number of to-be-received HS-SCCHs in the above example) can be transmitted at high speed from the base station 1 to the mobile station 2, when compared to a case of processing the HS-SCCH 119 and HS-PDSCH 120 through a process by the RRC layer process block 101. Consequently, according to the communication system of the first preferred embodiment, the mobile station 2 is controllable at high speed to avoid needless receiving operation in accordance with the packet transmission condition in downlink, which in turn reduces power consumption at the mobile station 2.

In the above explanation, as shown in Fig. 2, the respective spreading codes used for HS-SCCH (fast) and HS-PDSCH (fast) are the same as those for HS-SCCH (normal) and HS-PDSCH (normal). However, the base station 1 may alternatively define special spreading codes as the respective spreading codes for HS-SCCH (fast) and HS-PDSCH (fast), and notify the mobile station 2 of the special spreading codes in advance. In this case, by providing an additional receive circuit designed for the special spreading codes in the mobile station 2, the mobile station 2 can detect the presence of HS-SCCH (fast) and HS-PDSCH (fast) over HS-SCCH (normal) and HS-PDSCH (normal) more reliably. Consequently, control information transmission which must be accompanied by high reliability can be made more reliably.

Moreover, it is noted in the above explanation that the number of transmission bits for HS-PDSCH (fast) is a fixed value. However, it may alternatively be that the Redundant Area of the CCS part of HS-SCCH is divided into a plurality of regions, and a plurality of the numbers of transmission bits for HS-PDSCH (fast) are set and allocated to the respective regions. Further, in this case, control information other than the control information on the number of to-be-received HS-SCCHs may be transmitted to the mobile station 2 through HS-PDSCH (fast) together with the control information on the number of to-be-received HS-SCCHs, thereby controlling the mobile station 2.

### 2. Second Preferred Embodiment

In a communication system according to a second preferred embodiment of the present invention, the control information on the number of to-be-received HS-SCCHs is multiplexed with upper layer data, and transmitted to the receiving station 2 at the same transmission timing as the upper layer data. At this time, the control information on the number of to-be-received HS-SCCHs and upper layer data are transmitted using different HS-PDSCHs from each other.

The device structures of the base station 1 and mobile station 2 according to the second preferred embodiment are the same as those shown in Figs. 6 and 8, respectively.

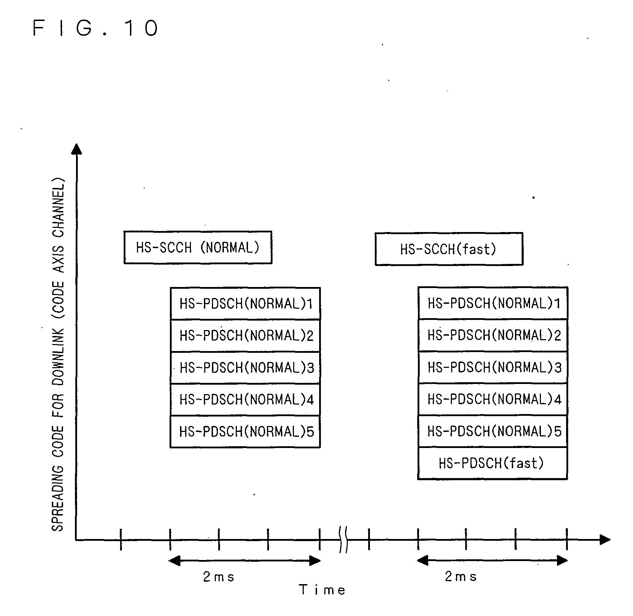

Fig. 10 is a timing chart illustrating transmission timing of the HSDPA-compatible channels in the downlink 5 shown in Fig. 1. Fig. 10 illustrates a case where HS-PDSCHs (normal) are first transmitted, and then code multiplexed HS-PDSCHs (normal) and HS-SCCH (fast) are transmitted.

Like the first preferred embodiment, it is required that the mobile station 2 know in advance the number of spreading codes and so on of HS-PDSCH before receiving the HS-PDSCH. Accordingly, HS-SCCH is transmitted ahead of HS-PDSCH from the base station 1 to the mobile station 2 so that the part 1 region of the HS-SCCH is demodulated ahead of the HS-PDSCH.

In the Fig. 10 example, at the first transmission timing, HS-PDSCHs (normal) are transmitted simultaneously with five spreading codes. At the second transmission timing, HS-PDSCHs (normal) with five spreading codes and HS-PDSCH (fast) with only one spreading code are transmitted simultaneously.

Also in Fig. 10, the control information on the number of to-be-received HS-SCCHs (HS-PDSCH (fast)) is transmitted using a different HS-PDSCH from those for the upper layer data (HS-PDSCHs (normal)). Namely, the HS-SCCH (fast) is transmitted with a spreading code different from the five spreading codes used for the HS-SCCHs (normal) transmissions.

When upper layer data and the control information on the number of to-be-received HS-SCCHs are transmitted at the same transmission timing by code multiplexing, the following two methods are available for setting the CCS of HS-SCCH (fast).

One is a method of designating only the spreading codes for the HS-PDSCHs (normal) explicitly by the CCS, and not designating the spreading code for the HS-PDSCH (fast) by the CCS. In this case, a spreading code having the next number of the spreading codes designated for the HS-PDSCHs (normal), for example, is implicitly used as the spreading code for the HS-PDSCH (fast). Namely, HS-PDSCH following the HS-PDSCHs (normal) is allocated as the HS-PDSCH (fast).

The other is a method of designating the spreading codes for both the HS-PDSCHs (normal) and HS-PDSCH (fast) explicitly by the CCS. In this case, with the limitation on the method of designating CCS (see (A) of Fig. 4) that the spreading codes for HS-PDSCH should be designated by the number of spreading codes and an offset position, the spreading codes for the HS-PDSCHs (normal) and HS-PDSCH (fast) are designated using successive numbers.

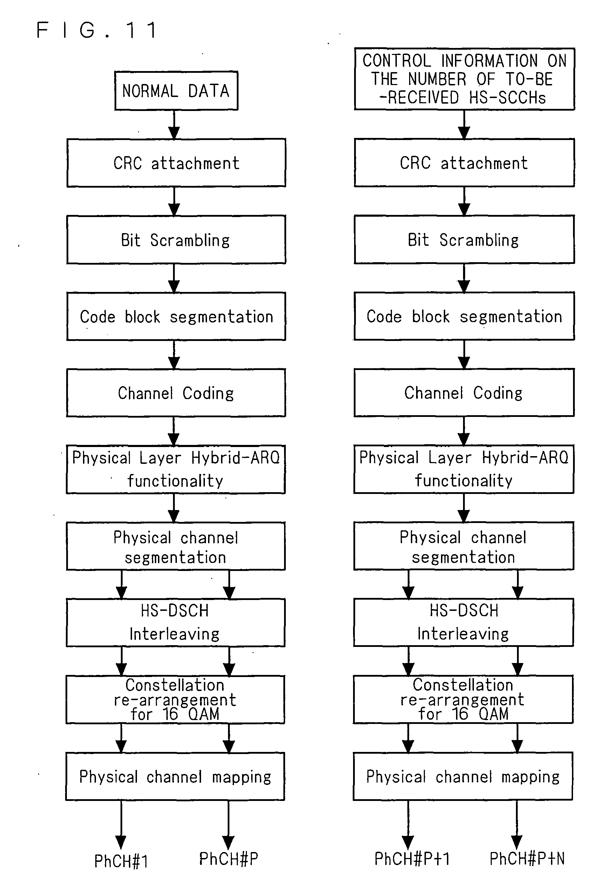

Fig. 11 is flowcharts illustrating process flows of HS-PDSCH by the HSDPA physical layer process block 904b (see Fig. 6) included in the base station 1. The left flow is a transmission process flow regarding upper layer data, and the right flow is a transmission process flow regarding the control information on the number of to-be-received HS-SCCHs. The HSDPA physical layer process block 904b performs the processes of these two chains independently.

In Fig. 11, "PhCH" denotes a physical layer output channel (HS-PDSCH). "P" in "PhCH#P" denotes the number of spreading codes for HS-PDSCH (normal), and "N" in "PhCH#P+N" denotes the number of spreading codes for HS-PDSCH (fast). In the Fig. 10 example, P = 5, and N = 1.

The transmission process flow regarding upper layer data is exactly the same as the flow defined by the Release 5 standards, which is unnecessary for explaining the present invention, so an explanation thereof is omitted here. Also, the transmission process flow regarding the control information on the number of to-be-received HS-SCCHs is the same as the flow defined by the Release 5 standards in terms of contents, with the only difference in data being initially input, so an explanation thereof is likewise omitted.

Although a process flow is divided into two chains for HS-PDSCH (normal) and HS-PDSCH (fast) in the Fig. 11 example, both processes may be performed by a process circuit of one chain if the base station 1 can afford to do so with its processing ability. In this case, the process circuit does not need to be large-scale.

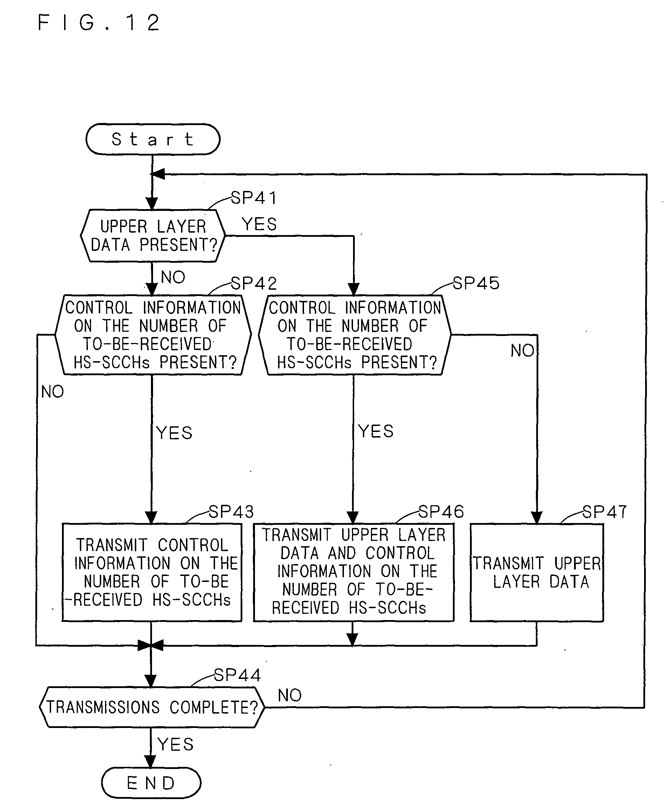

Fig. 12 is a flowchart illustrating a process flow in which the MAC-hs process section shown in Fig. 6 determines the sequence of transmission.

First, at step SP41, the MAC-hs process section determines whether the data 913 from the upper layer that needs to be transmitted is present.

When the data 913 from the upper layer that needs to be transmitted is not present (namely, when the determination result at step SP41 is "NO"), the MAC-hs process section proceeds to step SP42, and determines whether the control information on the number of to-be-received HS-SCCHs 916 has been input from the MAC-hs control section.

When the control information on the number of to-be-received HS-SCCHs 916 has not been input (namely, when the determination result at step SP42 is "NO"), the MAC-hs process section proceeds to step SP44, and determines whether transmissions are complete.

When the control information on the number of to-be-received HS-SCCHs 916 has been input as a result of the determination at step SP42 (namely, when the determination result at step SP42 is "YES"), the MAC-hs process section proceeds to step SP43, and sends the control information on the number of to-be-received HS-SCCHs 916 to the HSDPA physical layer process block 904b. Consequently, HS-PDSCH (fast) is transmitted to the mobile station 2. Subsequently, the MAC-hs process section determines whether the transmissions are complete at step SP44.

When the data 913 from the upper layer that needs to be transmitted is present as a result of the determination at step SP41 (namely, when the determination result at step SP41 is "YES"), the MAC-hs process section proceeds to step SP45, and determines whether the control information on the number of to-be-received HS-SCCHs 916 has been input from the MAC-hs control section.

When the control information on the number of to-be-received HS-SCCHs 916 has not been input (namely, when the determination result at step SP45 is "NO"), the MAC-hs process section proceeds to step SP47, and sends the data 913 from the upper layer to the HSDPA physical layer process block 904b. Consequently, HS-PDSCH (normal) is transmitted to the mobile station 2. Subsequently, the MAC-hs process section determines whether the transmissions are complete at step SP44.

When the control information on the number of to-be-received HS-SCCHs 916 has been input as a result of the determination at step SP45 (namely, when the determination result at step SP45 is "YES"), the MAC-hs process section proceeds to step SP46, and sends the data 913 from the upper layer and the control information on the number of to-be-received HS-SCCHs 916 to the HSDPA physical layer process block 904b. Consequently, HS-PDSCH (normal) and HS-PDSCH (fast) are multiplexed and transmitted to the mobile station 2. Subsequently, the MAC-hs process section determines whether the transmissions are complete at step SP44.

When all transmissions are not complete as a result of the determination at step SP44 (namely, when the determination result at step SP44 is "NO"), the MAC-hs process section returns to step SP41. On the other hand, when all transmissions are complete (namely, when the determination result at step SP44 is "YES"), the process is finished.

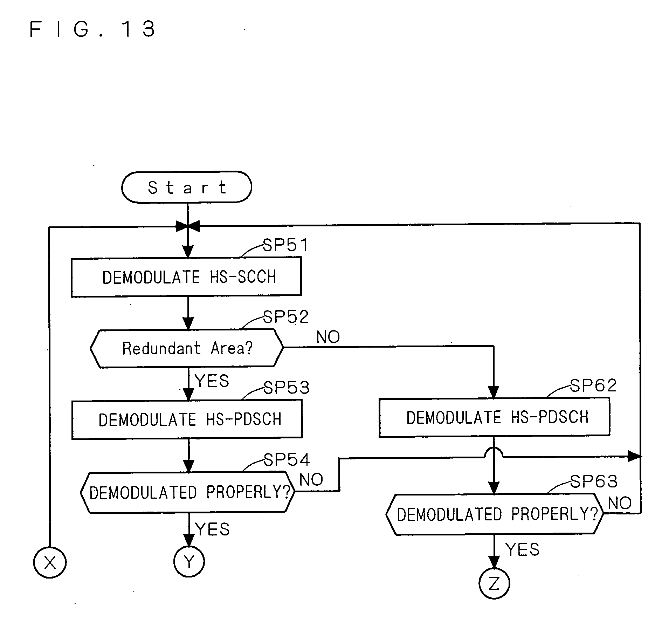

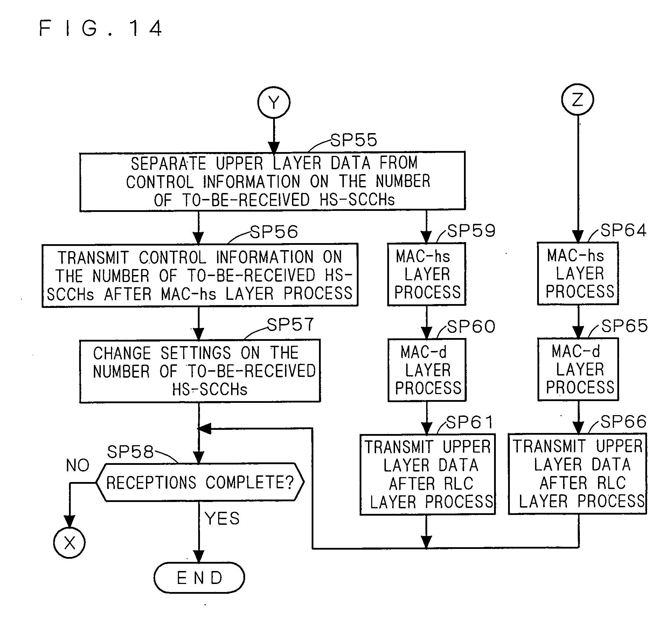

Figs. 13 and 14 are flowcharts illustrating a process flow at the HSDPA physical layer process block 104b and MAC-hs process block 103b shown in Fig. 8.

First, at step SP51, the HSDPA physical layer process block 104b demodulates the HS-SCCH 119, and then at step SP52, determines whether the CCS information described in the part 1 region of the HS-SCCH 119 is a bit combination within the Redundant Area.

When the CCS information is a bit combination within the Redundant Area (namely, when the determination result at step SP52 is "YES"), the HSDPA physical layer process block 104b proceeds to step SP53, and demodulates the HS-PDSCH 120 in accordance with all kinds of information included in the HS-SCCH 119.

Next, at step SP54, the HSDPA physical layer process block 104b determines whether the HS-PDSCH 120 has been demodulated properly.

When the HS-PDSCH 120 has been demodulated properly (namely, when the determination result at step SP54 is "YES"), the HSDPA physical layer process block 104b proceeds to step SP55, and separates the upper layer data from the control information on the number of to-be-received HS-SCCHs 116.

The control information on the number of to-be-received HS-SCCHs 116 separated at step SP55 is sent to the Mac-hs layer process block 103b at step SP56. The control information on the number of to-be-received HS-SCCHs 116 is then sent from the MAC-hs process section to the MAC-hs control section. The control information on the number of to-be-received HS-SCCHs 116 is further sent from the MAC-hs control section to the HSDPA physical layer process block 104b.

Next, at step SP57, the HSDPA physical layer process block 104b changes settings on the number of to-be-received HS-SCCHs based on the control information on the number of to-be-received HS-SCCHs 116.

Next, at step SP58, it is determined whether the receptions of the HS-SCCH 119 and HS-PDSCH 120 are complete.

Meanwhile, the upper layer data separated at step SP55 goes through a process by the MAC-hs layer process block 103b (step SP59), and a process by the MAC-d layer process bock 103a (step SP60) in this order. Next, the upper layer data is subjected to a process by the RLC layer process block 120, and then sent to an upper protocol layer. Next, at step SP58, it is determined whether the receptions of the HS-SCCH 119 and HS-PDSCH 120 are complete.

On the other hand, when the CCS information is a conventional bit combination as a result of the determination at step SP52 (namely, when the determination result at step SP52 is "NO"), the HSDPA physical layer process block 104b proceeds to step SP62, and demodulates the HS-PDSCH 120 in accordance with all kinds of information included in the HS-SCCH 119.

Next, at step SP63, the HSDPA physical layer process block 104b determines whether the HS-PDSCH 120 has been demodulated properly.

When the HS-PDSCH 120 has been demodulated properly (namely, when the determination result at step SP63 is "YES"), a process by the MAC-hs layer process block 103b (step SP64), and a process by the MAC-d layer process block 103a (step SP65) are performed in this order. Next, the upper layer data is subjected to a process by the RLC layer process block 120 at step SP66, and then sent to an upper protocol layer. Next, at step SP58, it is determined whether the receptions of the HS-SCCH 119 and HS-PDSCH 120 are complete.

When the HS-PDSCH 120 has not been demodulated properly as a result of the determinations at steps SP54 and SP63 (namely, when the determination results at steps SP54 and SP63 are "NO"), the HSDPA physical layer process block 104b returns to step SP51.

When all receptions are not complete as a result of the determination at step SP58 (namely, when the determination result at step SP58 is "NO"), the HSDPA physical layer process block 104b returns to step SP51. On the other hand, when all receptions are complete (namely, when the determination result at step SP58 is "YES"), the process is finished.

In such ways, according to the communication system of the second preferred embodiment, the control information on the number of to-be-received HS-SCCHs is transmitted at the same transmission timing as the upper layer data. Therefore, transmission timing will not be missed regarding the upper layer data.

### 3. Third Preferred Embodiment

In a communication system according to a third preferred embodiment of the present invention, the control information on the number of to-be-received HS-SCCHs is multiplexed with upper layer data, and transmitted to the receiving station 2 at the same transmission timing as the upper layer data. At this time, the control information on the number of to-be-received HS-SCCHs and upper layer data are transmitted using the same HS-PDSCH.

The device structures of the base station 1 and mobile station 2 according to the third preferred embodiment are the same as those shown in Figs. 6 and 8, respectively.

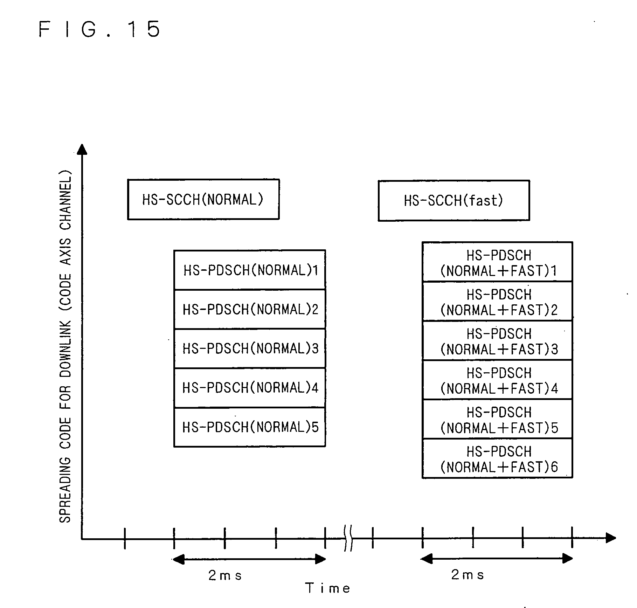

Fig. 15 is a timing chart illustrating transmission timing of the HSDPA-compatible channels in the downlink 5 shown in Fig. 1. Fig. 15 illustrates a case where HS-PDSCHs (normal) are first transmitted, and then code multiplexed HS-PDSCHs (normal + fast) and HS-SCCH (fast) are transmitted, the HS-PDSCH (normal + fast) including HS-PDSCH (normal) and HS-PDSCH (fast) mixed in the same packet.

Like the first preferred embodiment, it is required that the mobile station 2 know in advance the number of spreading codes and so on of HS-PDSCH before receiving the HS-PDSCH. Accordingly, HS-SCCH is transmitted ahead of HS-PDSCH from the base station 1 to the mobile station 2 so that the part 1 region of the HS-SCCH is demodulated ahead of the HS-PDSCH.

In the Fig. 15 example, at the first transmission timing, HS-PDSCHs (normal) are transmitted simultaneously with five spreading codes. At the second transmission timing, HS-PDSCHs (normal + fast) including HS-PDSCH (normal) and HS-PDSCH (fast) mixed in the same packet are transmitted simultaneously with six spreading codes.

When compared to that of HS-PDSCH (normal), the whole number of transmission bits of HS-PDSCH (normal+fast), which includes the control information on the number of to-be-received HS-SCCHs, increases correspondingly. Thus, the whole number of transmission bits including the number of transmission bits for the control information on the number of to-be-received HS-SCCHs is defined in advance.

As to the value of the Transport-block size information included in HS-SCCH (fast), a value including the number of transmission bits for the control information on the number of to-be-received HS-SCCHs may be additionally defined. Alternatively, the number of transmission bits for the control information on the number of to-be-received HS-SCCHs may be set as a fixed value, while adopting the same value as HS-PDSCH (normal) for the value of the Transport-block size information.

By setting the number of transmission bits for the control information on the number of to-be-received HS-SCCHs as a fixed value and notifying the mobile station 2 of the number of transmission bits in advance, it is unnecessary anymore to notify the mobile station 2 of the number of transmission bits for the control information on the number of to-be-received HS-SCCHs at every HS-PDSCH (normal+fast) transmission. This avoids an increase in complexity of the base station 1 and mobile station 2.

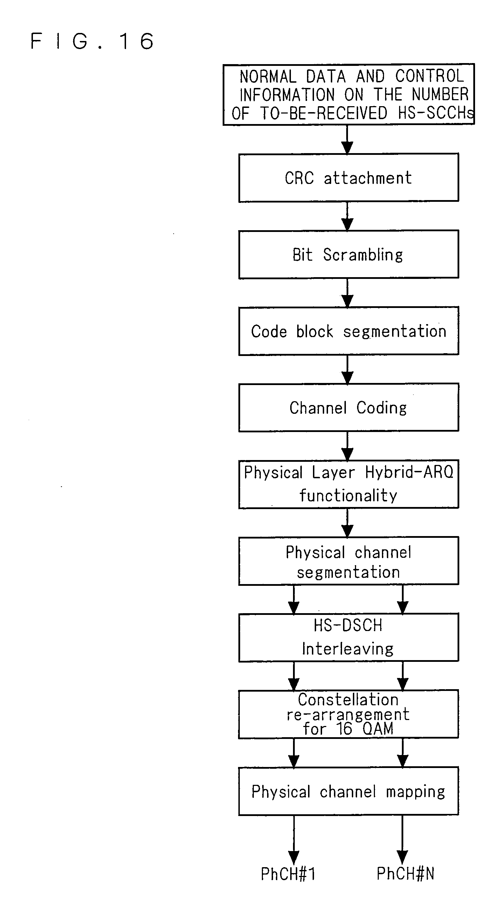

Fig. 16 is a flowchart illustrating a process flow of HS-PDSCH (normal + fast) by the HSDPA physical layer process block 904b (see Fig. 6) included in the base station 1.

In Fig. 16, "N" in "PhCH#N" denotes the number of spreading codes for HS-PDSCH (normal+fast). In the Fig. 15 example, N = 6.

This flowchart is different from the transmission process flow defined by the Release 5 standards only in that upper layer data and the control information on the number of to-be-received HS-SCCHs are input together at the step of inputting transmission data. The remaining process is the same as the flow of the Release 5 standards, so an explanation thereof is omitted here.

Although the upper layer data and the control information on the number of to-be-received HS-SCCHs are mixed at a first process step in the Fig. 16 example, this mixing process may be performed at any process step.

In such ways, according to the communication system of the third preferred embodiment, the control information on the number of to-be-received HS-SCCHs is transmitted at the same transmission timing as the upper layer data. Therefore, transmission timing will not be missed regarding the upper layer data.

### 4. Fourth Preferred Embodiment

In the communication system according to the above first preferred embodiment, the CCS information of HS-SCCH is set by a bit combination within the Redundant Area to thereby notify the mobile station 2 that the control information on the number of to-be-received HS-SCCHs is being transmitted through HS-PDSCH. For this reason, when transmitting HS-PDSCH (fast), the base station 1 needs to designate in this range (1 to 8) the instruction value of offset position of spreading codes to be used.

In contrast to this, a communication system according to a fourth preferred embodiment uses a TBS (Transport-block size) part that is included in HS-SCCH and used for indicating the transmission data size of HS-PDSCH, for the notification to the mobile station 2 when transmitting HS-PDSCH (fast).

Also, the transmission data size of the HS-PDSCH (fast) is set as a fixed value, the value thereof being notified to the mobile station 2 in advance.

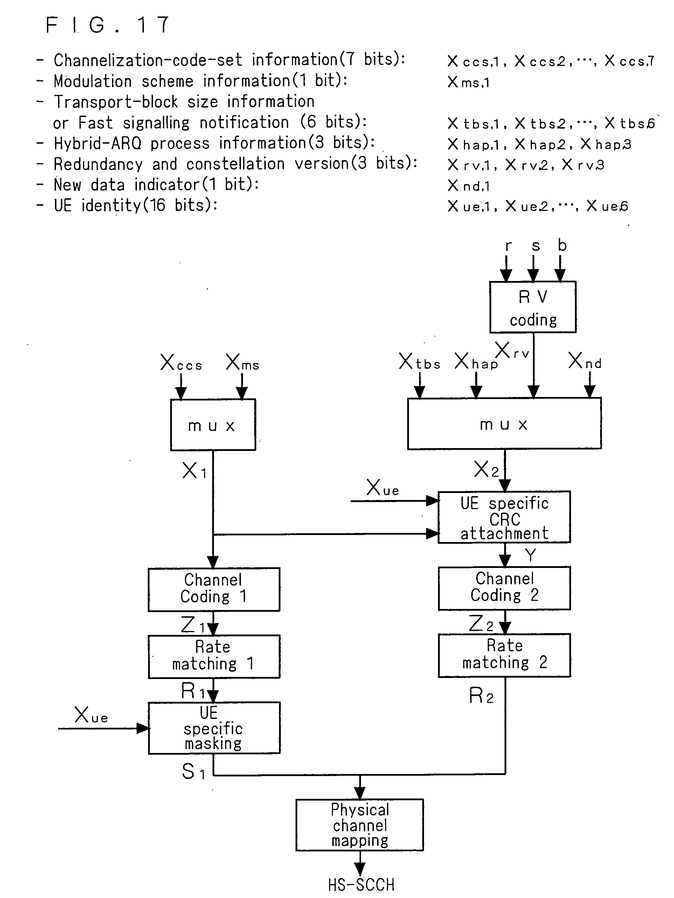

Fig. 17 is a preparation flow of HS-SCCH (normal) and HS-SCCH (fast). This preparation flow is different from the flow described in the technical specification TS 21.212 only in that notification that the control information on the number of to-be-received HS-SCCHs is present (Fast Signalling Notification) can be input at the step of inputting the Transport-block size information.

When HS-PDSCH (fast) is transmitted, a bit combination (111111, for example) not used for upper layer data transmission is set for the TBS part of the HS-SCCH (fast).

In such ways, according to the communication system of the fourth preferred embodiment, an arbitrary value can be set for the CCS part of HS-SCCH (fast), like HS-SCCH (normal). Therefore, even when transmitting HS-PDSCH (fast), the base station 1 can set a free value for the instruction value of offset position of spreading codes to be used.

While in the above first to fourth preferred embodiments, the mobile station 2 is notified that the control information on the number of to-be-received HS-SCCHs is being transmitted through HS-PDSCH by a change in interpretation at the receiving system of the mobile station 2 without changing the number of bits of the CCS part or TBS part of HS-SCCH, a notify-only separate format (and allocation of the number of bits to each part) may be additionally added.

Further, a notify-only channel may be added to the downlink, to be transmitted in a pair with HS-PDSCH. At this time, it is also possible to set the format of the notify-only channel to have the same length of time (2 msec) as HS-SCCH (normal), and use the part 1 region of HS-SCCH. This allows part of the receive circuit of the mobile station 2 to serve for a double purpose, which requires little increase in circuit scale of the receiving system of the mobile station 2.

Besides, when HS-PDSCH and control information are multiplexed and transmitted, various kinds of channel names used for notification can be assigned within the scope of the present invention, which are not limited by the descriptions of the above respective preferred embodiments.

Further, while the control information for controlling the number of to-be-received HS-SCCHs is transmitted from the base station 1 to the mobile station 2 in the above first to fourth preferred embodiments, any control information will do as long as it controls the mobile station 2 by the base station 1, and is transmitted through an RRC layer process in conventional techniques.

For example, not control information through the RRC layers both in the base station 1 and mobile station 2, like the control information on the number of to-be-received HS-SCCHs, but control information for controlling the mobile station 2 through the RRC layer in the mobile station 2 after being output from the RRC layer in the base station 1 (for example, the control information described in the technical specification TS 25.214, Chapter 6A.1 (General procedure), or the control information described in the same technical specification, Chapter 5.1.2.5A (Setting of the uplink DPCCH/HS-DPCCH power difference)), will be applicable. In this case, in the block diagram (Fig. 6) illustrating the device structure of the base station, the control information on the number of to-be-received HS-SCCHs 916 is not sent from the MAC-hs control section to the MAC-hs process section, but the control information for controlling the mobile station 2 is sent from the RRC layer process block 901 to the MAC-hs control section through a control line connecting between the RRC layer process block 901 and the MAC-hs layer process block 903b, and further sent from the MAC-hs control section to the MAC-hs process section as a control signal 916, followed by the same process as the above. The mobile station 2 performs the same operation as those explained in the above first to fourth preferred embodiments.

Moreover, while in the above first to fourth preferred embodiments, the control information on the number of to-be-received HS-SCCHs is transmitted from the base station 1 to the mobile station 2 by a transmission method that does not go through a process at each RRC layer in the base station 1 and mobile station 2, the transmission method according to the present invention and conventional transmission methods through a process at each RRC layer in the base station 1 and mobile station 2 may be shared. For example, at the time of initial settings of HSDPA, conventional transmission methods may be used to set the number of to-be-received HS-SCCHs as a default value or maximum value in the mobile station 2, and at the time of subsequent transmission, the transmission method according to the present invention may be used to change settings on the number of to-be-received HS-SCCHs. Or when settings are changed by both of the transmission methods, a value by the transmission method according to the present invention may be overwritten to be set at the mobile station 2.

Furthermore, in the above first to fourth preferred embodiments, the control information on the number of to-be-received HS-SCCHs may be accompanied with not only channel numbers and the number of channels, but related information such as at what timing the number of channels should be changed.

While the invention has been shown and described in detail, the foregoing description is in all aspects illustrative and not restrictive. It is therefore understood that numerous modifications and variations can be devised without departing from the scope of the invention.

## Claims

1. A communication system comprising:
a transmitting station (1) including a first physical layer process section (904), a first MAC layer process section (903a, 903b), a first RLC layer process section (902), and a first RRC layer process section (901);
a receiving station (2) including a second physical layer process section (104), a second MAC layer process section (103a, 103b), a second RLC layer process section (102), and a second RRC layer process section (101); and
an HS-SCCH and an HS-PDSCH connecting between said transmitting station (1) and said receiving station (2), wherein
said transmitting station (1) transmits control information for controlling said receiving station (2) to said receiving station (2) through said HS-PDSCH without making said control information go through a process by said first RRC layer process section (901), and
said receiving station (2) performs a prescribed process based on said control information received from said transmitting station (1) without making said control information go through a process by said second RRC layer process section (101).

2. The communication system according to claim 1, wherein
said control information is control information on the number of to-be-received HS-SCCHs, and
said prescribed process is a process of changing the number of to-be-received HS-SCCHs.

3. The communication system according to claim 1, wherein
upper layer data sent to said first physical layer process section (904) from an upper protocol layer than said first physical layer process section (904) is transmitted to said receiving station (2) through said HS-PDSCH, and
said control information is transmitted to said receiving station (2) at different timing from transmission timing of said upper layer data.

4. The communication system according to claim 1, wherein
upper layer data sent to said first physical layer process section (904) from an upper protocol layer than said first physical layer process section (904) is transmitted to said receiving station (2) through said HS-PDSCH, and
said control information is multiplexed with said upper layer data, and transmitted to said receiving station (2) at the same timing as transmission timing of said upper layer data.

5. The communication system according to claim 4, wherein
said control information is transmitted through a first HS-PDSCH, and
said upper layer data is transmitted through a second HS-PDSCH different from said first HS-PDSCH.

6. The communication system according to claim 5, wherein
notifying information indicating that said control information is being transmitted from said transmitting station (1) is transmitted from said transmitting station (1) to said receiving station (2) through said HS-SCCH, and
said first HS-PDSCH is designated explicitly by said notifying information.

7. The communication system according to claim 5, wherein
an HS-PDSCH following said second HS-PDSCH is allocated as said first HS-PDSCH.

8. The communication system according to claim 4, wherein
said control information and said upper layer data are both transmitted through said HS-PDSCH.

9. The communication system according to claim 1, wherein
upper layer data sent to said first physical layer process section (904) from an upper protocol layer than said first physical layer process section (904) is transmitted to said receiving station (2) through said HS-PDSCH,
information indicating that data is being transmitted from said transmitting station (1) through said HS-PDSCH is transmitted from said transmitting station (1) to said receiving station (2) through said HS-SCCH,
said information includes a part for indicating said HS-PDSCH used for transmission of said data, and
when said transmitting station (1) transmits said control information to said receiving station (2), said receiving station (2) is notified that said control information is being transmitted by the contents described in said part being different from the contents described in said part when said data is said upper layer data.

10. The communication system according to claim 1, wherein
upper layer data sent to said first physical layer process section (904) from an upper protocol layer than said first physical layer process section (904) is transmitted to said receiving station (2) through said HS-PDSCH,
information indicating that data is being transmitted from said transmitting station (1) through said HS-PDSCH is transmitted from said transmitting station (1) to said receiving station (2) through said HS-SCCH,
said information includes a part for indicating a data size of said data,
a data size of said control information is a fixed value, and notified to said receiving station (2) in advance, and
when said transmitting station (1) transmits said control information to said receiving station (2), said receiving station (2) is notified that said control information is being transmitted by the contents described in said part being different from the contents described in said part when said data is said upper layer data.

11. A transmitting station comprising
a physical layer process section (904), a MAC layer process section (903a, 903b), an RLC layer process section (902), and an RRC layer process section (901),
said transmitting station transmitting control information for controlling a receiving station (2) to said receiving station through a prescribed channel without making said control information go through a process by said RRC layer process section (901).

12. A receiving station comprising
a physical layer process section (104), a MAC layer process section (103a, 103b), an RLC layer process section (102), and an RRC layer process section (101),
said receiving station performing a prescribed process based on control information received from a transmitting station (1) through a prescribed channel without making said control information go through a process by said RRC layer process section (101).
